# FASCICULE DE BREVET EUROPEEN

(11) **EP 4 017 672 B1**
(45) Date de publication et mention de la délivrance du brevet: **17.12.2025**
(21) Numéro de dépôt: 20772363.6
(22) Date de dépôt: 17.08.2020
(51) Int. Cl.: B22F 5/00, B22F 10/25, B22F 12/20, B22F 12/53, B33Y 10/00, B23K 26/342, B23K 15/00, B29C 64/209, B29C 64/371, B23K 101/00, B33Y 30/00, B23K 37/003

(54) **PROCEDE DE FABRICATION ADDITIVE D'UNE PIECE DE TURBOMACHINE**
ADDITIVES FERTIGUNGSVERFAHREN FÜR EIN TEIL EINER TURBOMASCHINE
ADDITIVE MANUFACTURING METHOD FOR A PIECE OF A TURBOMACHINE

(30) Priorité: 22.08.2019 FR 1909344
(43) Date de publication de la demande: 29.06.2022
(73) Titulaire: SAFRAN AIRCRAFT ENGINES, 75015 Paris (FR)
(72) Inventeur: GRALL, Terence, 77550 MOISSY-CRAMAYEL (FR); POUZET, Sébastien, Yohann, 77550 MOISSY-CRAMAYEL (FR); SEINCE, Hervé, Antoine, Frédéric, 77550 MOISSY-CRAMAYEL (FR); MAUVOISIN, Ronan, 35580 LASSY (FR)
(74) Mandataire: Gevers & Orès
(86) Numéro de dépôt international: PCT/FR2020/051469
(87) Numéro de publication internationale: WO 2021/032923

(56) Documents cités:
- EP-A1- 2 705 942
- EP-A1- 3 388 171
- EP-A1- 3 498 402
- WO-A1-2019/035810
- WO-A2-2016/086912
- US-A1- 2019 030 602

## Description

### Domaine de l'invention

La présente invention est relative au domaine de la fabrication additive de pièce, notamment dans l'aéronautique.

### Etat de la technique

L'état de la technique est par exemple illustré par les documents US-A1-2019030602, EP-A1-2 705 942, WO-A2-2016086912, EP-A1-3 388 171, EP-A1-3 498 402, WO-A1-2019035810.

La technologie par fabrication additive permet de réaliser des pièces complexes, notamment sans usinage, en déposant et en empilant des couches successives d'un matériau destiné à la fabrication de la pièce et à les consolider partiellement ou totalement. Cette technique progresse depuis plusieurs années et de manière importante. La fabrication additive comprend de manière non exhaustive, la fusion sélective par laser (SLM), la fusion par faisceau d'électron sur lit de poudre (EBM) et la fusion directe de métal (LMD). Dans la technique du LMD, le matériau peut être amené sous forme de poudre (LMD-powder) ou sous forme de fil (LMD-wire).

Le principe de la technique du LMD avec un apport de matériau sous forme de fil consiste en la mise en couche par dépôt du fil de matériau en fusion. Cela est réalisé à partir d'une installation de fabrication additive comprenant une buse d'amenée du fil et d'un élément de génération d'une énergie vers le fil de manière à le faire fondre et à obtenir un matériau en fusion (ou bain de fusion) qui est déposé sur un support de la pièce finale.

Le procédé peut être long en fonction de la quantité de matière à déposer et du temps de dépôt. L'énergie apportée au fil pour sa fusion génère une montée en température dans l'installation pendant toute la durée de fabrication de la pièce. La température peut atteindre environ 2000°C au niveau du matériau en fusion ce qui peut entraîner une déformation de certains organes de l'installation notamment de la buse d'amenée du fil. En effet, cette buse d'amenée (généralement en cuivre) va, sous l'effet de la chaleur, s'allonger. L'allongement peut avoir un impact sur la qualité du dépôt du matériau en fusion car lors de l'échauffement de la buse d'amenée, cette dernière va commencer à se dilater et ainsi sortir des conditions optimales de dépôt. Le dépôt alors réalisé peut présenter des imperfections et être considéré comme non conforme lors de son inspection. Dans le pire des cas, l'échauffement de la buse d'amenée entraîne une diminution de section de passage du fil et donc un arrêt du débit de fil.

### Résumé de l'invention

La présente invention a notamment pour objectif de fournir un procédé de fabrication d'une pièce, en particulier de turbomachine, permettant de maintenir une sortie optimale de matériau en fusion de manière à obtenir un dépôt de matériau de qualité et conforme, sans impacter les délais de fabrication et le coût de fabrication.

Nous parvenons à cet objectif, conformément à l'invention, grâce à un procédé de fabrication d'une pièce selon la revendication 1.

Ainsi, cette solution permet d'atteindre l'objectif susmentionné. En particulier, le refroidissement de la buse d'amenée est une solution simple qui permet de maintenir les caractéristiques géométriques de la buse d'amenée et de préserver la qualité du dépôt. Un tel refroidissement ne rallonge pas le temps de fabrication de la pièce et n'impacte pas le coût de fabrication non plus.

Suivant une autre caractéristique, le matériau est sous forme de fil. Le dépôt de matériau en fusion sous forme de cordon de matériau avec un fil en apport est plus rapide. Le dépôt du cordon de matière est plus régulier et propre ce qui implique une meilleure qualité de la pièce en termes de résistances physicochimique et mécanique. De plus, le rendement de la matière déposée est important puisqu'il est quasiment de 100%.

Suivant une autre caractéristique, le matériau est métallique de sorte à obtenir des pièces métalliques de turbomachine.

Suivant encore une autre caractéristique du procédé, l'élément de refroidissement est projeté à une pression comprise entre 1 et 3 bars. Une telle pression est suffisante pour refroidir la buse d'amenée sans perturber ou altérer la fusion du matériau dans la buse d'amenée.

Suivant une autre caractéristique, l'élément de refroidissement présente une température de l'ordre de 20°C. Cette température (température ambiante) permet de ne pas utiliser de source d'énergie supplémentaire pour refroidir la buse d'amenée qui est déjà à une température relativement plus froide que celle du matériau fondu dans la buse d'amenée.

Suivant une autre caractéristique, l'élément de refroidissement est un flux de gaz neutre tel que l'azote ou l'argon. De la sorte, le refroidissement permet une meilleure protection locale du cordon de matériau obtenue par le matériau en fusion et déposé par la buse d'amenée car le gaz neutre utilisé sert également à rendre inerte l'enceinte de l'installation dans laquelle sont agencés le support de fabrication et la buse d'amenée. Le gaz neutre permet en outre d'éviter l'oxydation de la pièce en cours de fabrication.

Suivant une autre caractéristique, l'étape de projection d'énergie est réalisée avec un faisceau de laser. Une telle configuration est simple à mettre en œuvre tout en apportant une maitrise de l'énergie et de la localisation. Les gains économique et de temps sont ainsi significatifs.

Suivant une autre caractéristique, la projection de l'élément de refroidissement est continue pour éviter l'augmentation de la température du matériau de la buse d'amenée.

Avantageusement, l'élément de refroidissement et la buse d'amenée se déplacent simultanément.

Avantageusement, l'élément de refroidissement est projeté par plusieurs buses de pulvérisation orientées vers la buse d'amenée.

Avantageusement, le procédé comprend une étape de dépôt du matériau sur le support de fabrication, l'étape de refroidissement de la buse d'amenée étant réalisée durant l'étape de projection et de dépôt.

L'invention concerne également une installation pour la réalisation d'un procédé de fabrication d'une pièce selon la revendication 12.

Suivant une caractéristique de l'installation, la buse de pulvérisation est agencée à une distance de la buse d'amenée comprise entre 3 et 10 cm. Une telle distance permet que la buse de pulvérisation soit suffisamment proche pour refroidir la buse d'amenée et suffisamment éloignée pour ne pas être dans la trajectoire de la source d'énergie destinée à fondre le matériau.

Les buses de pulvérisation agencées l'une sur l'autre suivant une direction parallèle à la hauteur de la buse d'amenée permettent que le refroidissement de la buse d'amenée soit uniforme sur toute sa hauteur.

Suivant encore une autre caractéristique, la buse ou toutes les buses de projection et la buse d'amenée sont fixes les unes par rapport aux autres de sorte à réaliser un refroidissement continu.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux figures suivantes annexées :
[Fig. 1] La figure 1 est une vue schématique d'un mode de réalisation d'une installation de fabrication additive d'une pièce en particulier de turbomachine, avec une tête de traitement comprenant une buse d'amenée d'un matériau à fondre et un élément de projection d'énergie selon l'invention ;
[Fig. 2] La figure 2 est une vue schématique d'un autre mode de réalisation d'une installation de fabrication additive d'une pièce de turbomachine, avec une tête de traitement qui comprend une buse d'amenée d'un matériau à fondre et qui est indépendante d'un élément de projection d'énergie selon l'invention ;
[Fig. 3] La figure 3 est une vue de détail et schématique d'une buse d'amenée de matériau d'une installation de fabrication additive selon l'invention ; et
[Fig. 4] La figure 4 est une vue schématique et en perspective d'une tête de traitement d'une installation de fabrication additive selon l'invention.

### Description détaillée de l'invention

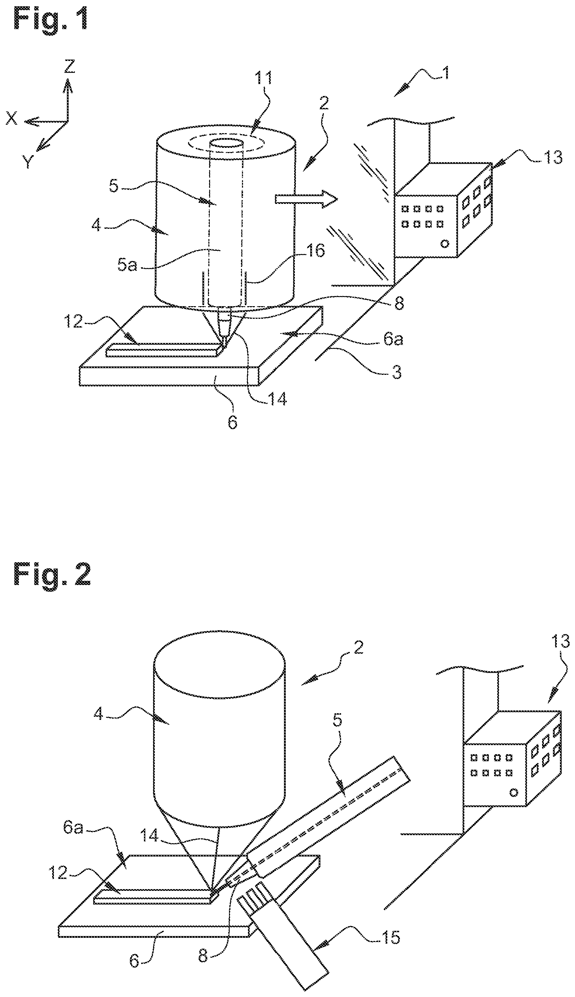

Sur la figure 1 est représentée de manière schématique et partiellement, une installation 1 de fabrication additive de pièce, en particulier de turbomachine. Bien entendu, l'invention n'est pas limitée aux pièces de turbomachine.

L'installation 1 représentée concerne une installation de déposition métallique par laser siglé LMD (pour « Laser Metal Deposition») et en particulier par apport de fil (LMD-wire) qui consiste à projeter simultanément un faisceau laser et une quantité de matière en fusion sur un support de fabrication. Chaque quantité de fil est fondue et est fusionnée pour former couche par couche la pièce à réaliser. Cette installation et le procédé associé permettent de réaliser des pièces complexes en trois dimensions. Bien entendu, le matériau d'apport destiné à permettre la réalisation de la pièce peut être sous forme de poudre, soit une installation de type « LMD-powder » en anglais.

L'installation 1 dans le présent exemple comprend un dispositif 2 de fabrication additive et une enceinte 3 dans laquelle est installé ce dispositif 2. Ce dernier comprend une tête de traitement 4 comprenant des éléments d'alimentation 5 en matériau sur un support de fabrication 6 qui est disposé dans l'enceinte 3 également. La pièce sera construite couche par couche sur le support de fabrication 6. Le support de fabrication 6 dans le présent exemple est fixe et présente une surface de travail 6a définie dans un plan qui est perpendiculaire au plan de la figure 1. De manière alternative, le support de fabrication 6 est mobile suivant une translation verticale. Dans ce cas, le support de fabrication 6 est monté sur un fond mobile (non représenté) de l'enceinte 3.

Le matériau est ici apporté sous la forme d'un fil. Les éléments d'alimentation 5 comprennent une bobine (non représentée) d'où provient le fil et sur laquelle est enroulé le fil. Alternativement, les éléments d'alimentation 5 comprennent un réservoir d'alimentation où est stocké le fil enroulé et disposé dans la tête de traitement 4. Dans le présent exemple, les éléments d'alimentation 5 en matériau comprennent un conduit d'alimentation 5a qui est agencé dans la tête de traitement 4 et qui traverse cette dernière suivant un axe radial Z (qui est dans le plan de la figure 1 et qui est perpendiculaire au plan de la surface de travail 6a contenant des axes transversal Y et longitudinal X). Le conduit d'alimentation 5a est relié au réservoir.

La tête de traitement 4 comprend une buse d'amenée 8 du matériau qui est orientée vers le support de fabrication 6, et en particulier de la surface de travail 6a. Comme nous pouvons le voir sur la figure 1, la buse d'amenée 8 prolonge la tête de traitement 4 suivant l'axe radial Z (ici vertical). La tête de traitement 4 est amenée à se déplacer par rapport au support de fabrication 6 suivant au moins les trois axes (radial Z, longitudinal X et transversal Y) qui sont perpendiculaires les uns par rapport aux autres.

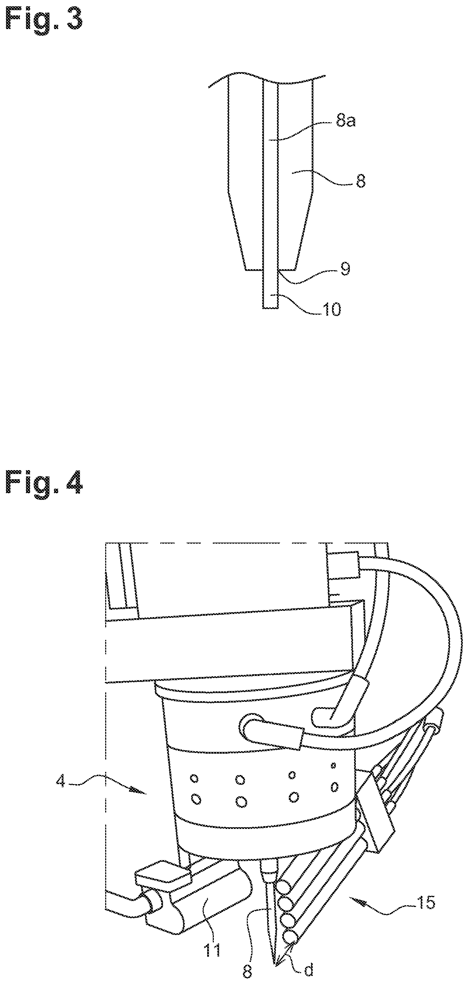

En référence à la figure 3, la buse d'amenée 8 comprend un premier canal 8a traversant celle-ci de part et d'autre suivant l'axe radial, et en particulier qui débouche à une première extrémité radiale dans le conduit d'alimentation 5a (ou le réservoir) et à une deuxième extrémité radiale dans un orifice de sortie 9. Cette buse d'amenée 8 permet de maintenir le fil 10 la traversant avant sa fusion.

Le fil 10 peut présenter un diamètre de l'ordre de 1 mm suivant la configuration de la tête de traitement et le premier canal 8a présente un diamètre de l'ordre de 1, 10 (± 0.05 mm).

L'installation 1 comprend un élément de projection d'énergie 11 qui permet la fusion du matériau de manière que celui-ci soit déposé sur le support de fabrication 6 sous forme d'un cordon de matière 12 en fusion ou fondue comme illustré sur la figure 1. L'élément de projection d'énergie 11 est relié à une source d'énergie qui est pilotée par un système de contrôle électronique 13 de l'installation. L'élément de projection d'énergie est orienté vers le matériau sortant de la buse d'amenée 8 de sorte à faire fondre celui-ci avant son dépôt sur le support de fabrication 6.

Dans l'exemple de la figure 1, l'élément de projection d'énergie 11 est agencé dans la tête de traitement 4, la tête de traitement 4 comprend un ou plusieurs conduit(s) 16 (représenté(s) schématiquement) qui débouche(nt) dans un orifice défini dans une surface externe de la tête de traitement 4. La surface externe est orientée vers la surface de travail 6a du support de fabrication 6. L'axe d'une partie d'un conduit 16 ou de chaque conduit 16 est transversal à l'axe du premier canal 8a et est orienté vers la buse d'amenée 8 qui prolonge la tête de traitement 4. L'axe du premier canal 8a est coaxial avec la tête de traitement 4.

Dans le présent exemple, l'élément de projection d'énergie 11 comprend un faisceau de laser 14. L'axe du faisceau laser est coaxial ou sensiblement coaxial (en formant un angle de plus ou moins de 10 degrés par rapport à l'axe radial) et orienté vers la surface de travail 6a du support de fabrication 6 comme cela est visible sur la figue 1.

Sur la figure 2 qui illustre un autre mode de réalisation de l'installation 1, les éléments d'alimentation 5 en matériau sont distincts de la tête de traitement 4 et sont agencés à distance de celle-ci. L'élément de projection d'énergie 11 est installé dans la tête de traitement 4. L'axe de projection de l'élément de projection d'énergie 11 est transversal à l'axe de sortie du fil dans la buse d'amenée 8. La buse d'amenée 8 se déplace avantageusement, mais non limitativement, en même temps que la tête de traitement 4 et suivant les axes longitudinal, transversal et radial.

Bien entendu, diverses techniques utilisant un autre type d'énergie pour faire fondre le matériau qui sera déposé sur le support de fabrication 5 est envisageable (arc électrique ou plasma).

En référence aux figures 2 et 4, l'installation 1 comprend une buse de pulvérisation 15 d'un élément de refroidissement de la buse d'amenée 8 du matériau de sorte que cette dernière ne s'échauffe pas suite aux températures élevées de l'énergie nécessaire pour la fusion du matériau.

La buse de pulvérisation 15 est orientée vers la buse d'amenée 8 du matériau et à distance de celle-ci. Dans l'exemple illustré de la figure 4, plusieurs buses de pulvérisation sont orientées vers la buse d'amenée. Les buses 15 sont superposées suivant une direction parallèle à l'axe de la buse d'amenée (ici l'axe radial) de manière à réaliser un refroidissement efficace et uniforme de la buse d'amenée 8 sur toute sa hauteur ou longueur. Le nombre de buse est compris entre 1 et 5. Avantageusement, le nombre de buse dépend de la hauteur de la buse d'amenée.

Dans le but de refroidir efficacement la buse d'amenée 8, l'élément de refroidissement est projeté à une pression comprise entre 1 et 3 bars. Cette pression est suffisante pour refroidir la buse mais n'entraîne pas de perturbation du bain de fusion.

Avantageusement, mais non limitativement, la buse de pulvérisation 15 de l'élément de refroidissement est agencée à une distance d comprise entre 3 et 10 cm de la buse d'amenée 8. La buse 15 se déplace simultanément avec la buse d'amenée 8 pour garantir un refroidissement continu de la buse d'amenée 8.

Suivant une caractéristique avantageuse, mais non limitativement, la buse de pulvérisation 15 est montée sur un support des éléments d'alimentation 5 en matériau de sorte que leurs déplacements soient simultanés. En d'autres termes, la ou les buse(s) de pulvérisation 15 et la buse d'amenée 8 sont fixes les unes par rapport aux autres.

L'élément de refroidissement comprend un gaz inerte du type Argon ou Azote qui permet d'éviter l'oxydation de la pièce en cours de construction. En effet, la buse de pulvérisation 15 est également installée dans l'enceinte (qui est ici fermée) et étant à distance de la tête de traitement 4, le gaz qui refroidit la buse d'amenée remplit l'enceinte créant une atmosphère de protection. La température du gaz est sensiblement celle de l'air ambiant, soit environ 20°C et par conséquent relativement plus froid que la température du bain de fusion (à 2000°C) dans la buse d'amenée.

Nous allons maintenant décrire le procédé de fabrication de la pièce de turbomachine, à l'aide de l'installation 1 décrite ci-dessus. Le procédé comprend une étape d'apport du matériau dans la buse d'amenée 8. Dans cette étape d'apport, le matériau est amené dans la buse 8 sous forme de fil, ici métallique, comme nous l'avons vu précédemment.

Le procédé comprend une étape de projection d'énergie vers le matériau de manière à provoquer la fusion dudit matériau sortant de la buse d'amenée. Le matériau qui a fondu est alors déposé sous forme de cordon de matériau le long d'une première direction sur le support de fabrication.

Plusieurs cordons de matériau sont déposés l'un à côté de l'autre suivant une deuxième direction (axe transversal Y) sur le support de fabrication 6 et ensuite couche après couche suivant une troisième direction ici parallèle à l'axe vertical.

Le procédé comprend une étape de refroidissement de la buse d'amenée 8 lors de l'étape de projection d'énergie. Le gaz inerte utilisé pendant cette étape est pulvérisé sur la buse d'amenée et simultanément à l'étape de projection d'énergie pour que la buse d'amenée ne s'échauffe pas et que le cordon de matière soit de bonne qualité.

L'élément de refroidissement est projeté sur toute la hauteur de la buse d'amenée. Avantageusement, la projection de l'élément de refroidissement est continue. Par continue, il est entendu que la projection de l'élément de refroidissement est réalisée durant au moins toute l'étape de projection d'énergie sans interruption de la projection de l'élément de refroidissement. Cependant, la pression de projection peut par exemple varier.

Avantageusement, l'étape de refroidissement est réalisée pendant l'étape de projection et de dépôt du matériau.

## Revendications

1. Procédé de fabrication d'une pièce, en particulier de turbomachine, sous forme de plusieurs couches superposées d'un matériau sur un support de fabrication (6), le procédé comprenant une étape d'apport du matériau dans une buse d'amenée (8) et une étape de projection d'énergie vers le matériau, de manière à provoquer une fusion du matériau sur le support de fabrication, **caractérisé en ce que** le procédé comprend une étape de refroidissement de la buse d'amenée (8) par un élément de refroidissement projeté par au moins une buse de pulvérisation (15) lors de l'étape de projection d'énergie et **en ce que** l'élément de refroidissement est projeté sur toute la hauteur de la buse d'amenée (8).

2. Procédé selon la revendication précédente, **caractérisé en ce que** le matériau est sous forme de fil.

3. Procédé selon l'une quelconque des revendications précédentes, **caractérisé en ce que** le matériau est métallique.

4. Procédé selon l'une quelconque des revendications précédentes, **caractérisé en ce que** l'élément de refroidissement est projeté à une pression comprise entre 1 et 3 bars.

5. Procédé selon l'une quelconque des revendications précédentes, **caractérisé en ce que** l'élément de refroidissement présente une température de l'ordre de 20°C.

6. Procédé selon l'une quelconque des revendications précédentes, **caractérisé en ce que** l'élément de refroidissement est un flux de gaz neutre tel que l'azote ou l'argon.

7. Procédé selon l'une quelconque des revendications précédentes, **caractérisé en ce que** l'étape de projection d'énergie est réalisée avec un faisceau de laser.

8. Procédé selon l'une quelconque des revendications précédentes, **caractérisé en ce que** la projection de l'élément de refroidissement est continue.

9. Procédé selon l'une quelconque des revendications précédentes, **caractérisé en ce qu'**il s'agit d'une fabrication additive par déposition métallique laser (LMD) par fil.

10. Procédé selon l'une quelconque des revendications précédentes, **caractérisé en ce qu'**il comprend une étape de dépôt du matériau sur le support de fabrication (6), l'étape de refroidissement de la buse d'amenée (8) étant réalisée durant l'étape de projection et de dépôt.

11. Procédé selon l'une quelconque des revendications 1 à 10, **caractérisée en ce que** la projection d'énergie est réalisée par un élément de projection d'énergie (11) relié à une source d'énergie qui est pilotée par un système de contrôle électronique (13) d'une installation et **en ce que** le matériau est fondu avant son dépôt sur le support de fabrication (6).

12. Installation (1) pour la réalisation d'un procédé de fabrication d'une pièce, en particulier de turbomachine, sous forme de plusieurs couches superposées d'un matériau sur un support de fabrication (6), l'installation (1) comprenant une buse d'amenée (8) du matériau destiné à fabriquer la pièce et un élément de projection d'énergie (11) en direction du matériau de manière à obtenir une fusion du matériau sur le support de fabrication (6), **caractérisée en ce qu'**au moins une buse de pulvérisation (15) est destinée à projeter un élément de refroidissement sur toute la hauteur de la buse d'amenée (8).

13. Installation (1) selon la revendication précédente, **caractérisée en ce que** la buse de pulvérisation (15) est agencée à une distance de la buse d'amenée (8) comprise entre 3 et 10 cm.

14. Installation (1) selon l'une des revendications 12 et 13, **caractérisée en ce que** l'installation comprend plusieurs buses de pulvérisation (15) et les buses de pulvérisation (15) sont agencées l'une sur l'autre suivant une direction parallèle à la hauteur de la buse d'amenée (8).

15. Installation (1) selon l'une quelconque des revendications 12 à 14, **caractérisée en ce que** la buse ou toutes les buses de pulvérisation (15) et la buse d'amenée (8) sont fixes les unes par rapport aux autres.

16. Installation (1) selon l'une quelconque des revendications 12 à 15, **caractérisée en ce que** l'élément de projection d'énergie (11) est relié à une source d'énergie qui est pilotée par un système de contrôle électronique (13) de l'installation et **en ce que** l'élément de projection d'énergie (11) est orienté vers le matériau sortant de la buse d'amenée (8) de sorte à faire fondre celui-ci avant son dépôt sur le support de fabrication (6).

## Patentansprüche

1. Fertigungsverfahren für ein Werkstück, insbesondere einer Turbomaschine, in Form von mehreren übereinanderliegenden Schichten eines Materials auf einer Fertigungsunterlage (6), wobei das Verfahren einen Schritt der Einbringung des Materials in einer Zufuhrdüse (8) und einen Schritt der Projektion von Energie zu dem Material derart, dass ein Schmelzen des Materials auf der Fertigungsunterlage verursacht wird, umfasst, **dadurch gekennzeichnet, dass** das Verfahren einen Schritt der Abkühlung der Zufuhrdüse (8) durch ein Abkühlelement von mindestens einer Zerstäubungsdüse (15) während des Schritts der Projektion von Energie umfasst und dadurch, dass das Abkühlelement auf der gesamten Höhe der Zufuhrdüse (8) projiziert wird.

2. Verfahren nach dem vorstehenden Anspruch, **dadurch gekennzeichnet, dass** das Material in Drahtform vorliegt.

3. Verfahren nach einem der vorstehenden Ansprüche, **dadurch gekennzeichnet, dass** das Material metallisch ist.

4. Verfahren nach einem der vorstehenden Ansprüche, **dadurch gekennzeichnet, dass** das Abkühlelement mit einem Druck zwischen 1 und 3 bar projiziert wird.

5. Verfahren nach einem der vorstehenden Ansprüche, **dadurch gekennzeichnet, dass** das Abkühlelement eine Temperatur in der Größenordnung von 20°C aufweist.

6. Verfahren nach einem der vorstehenden Ansprüche, **dadurch gekennzeichnet, dass** das Abkühlelement eine Strömung von neutralem Gas wie etwa Stickstoff oder Argon ist.

7. Verfahren nach einem der vorstehenden Ansprüche, **dadurch gekennzeichnet, dass** der Schritt der Projektion von Energie mit einem Laserstrahl durchgeführt wird.

8. Verfahren nach einem der vorstehenden Ansprüche, **dadurch gekennzeichnet, dass** die Projektion des Abkühlelements kontinuierlich ist.

9. Verfahren nach einem der vorstehenden Ansprüche, **dadurch gekennzeichnet, dass** es sich um eine additive Fertigung durch drahtbasierte Laser-Metallabscheidung (LMD) handelt.

10. Verfahren nach einem der vorstehenden Ansprüche, **dadurch gekennzeichnet, dass** es einen Schritt der Ablagerung des Materials auf der Fertigungsunterlage (6) umfasst, wobei der Schritt der Abkühlung der Zufuhrdüse (8) während des Schritts der Projektion und der Ablagerung durchgeführt wird.

11. Verfahren nach einem der Ansprüche 1 bis 10, **dadurch gekennzeichnet, dass** die Energieprojektion durch ein Energieprojektionselement (11) erfolgt, das an eine Leistungsquelle angeschlossen ist, die von einem elektronischen Steuersystem (13) einer Anlage gesteuert wird, und dass das Material vor seiner Ablagerung auf der Fertigungsunterlage (6) geschmolzen wird.

12. Anlage (1) für die Durchführung eines Fertigungsverfahrens für ein Werkstück, insbesondere einer Turbomaschine, in Form von mehreren übereinanderliegenden Schichten eines Materials auf einer Fertigungsunterlage (6), wobei die Anlage (1) eine Zufuhrdüse (8) des für die Fertigung des Werkstücks vorgesehenen Materials und ein Energieprojektionselement (11) in Richtung des Materials derart, dass ein Schmelzen des Materials auf der Fertigungsunterlage (6) erreicht wird, umfasst, **dadurch gekennzeichnet, dass** mindestens eine Zerstäubungsdüse (15) dazu vorgesehen ist, ein Abkühlelement auf die gesamte Höhe der Zufuhrdüse (8) zu projizieren.

13. Anlage (1) nach dem vorstehenden Anspruch, **dadurch gekennzeichnet, dass** die Zerstäubungsdüse (15) in einem Abstand zwischen 3 und 10 cm von der Zufuhrdüse (8) angeordnet ist.

14. Anlage (1) nach einem der Ansprüche 12 und 13, **dadurch gekennzeichnet, dass** die Anlage mehrere Zerstäubungsdüsen (15) umfasst und die Zerstäubungsdüsen (15) in einer Richtung parallel zur Höhe der Zufuhrdüse (8) übereinander angeordnet sind.

15. Anlage (1) nach einem der Ansprüche 12 bis 14, **dadurch gekennzeichnet, dass** die eine Zerstäubungsdüse oder alle Zerstäubungsdüsen (15) und die Zufuhrdüse (8) in Bezug zueinander festsitzend sind.

16. Anlage (1) nach einem der Ansprüche 12 bis 15, **dadurch gekennzeichnet, dass** das Energieprojektionselement (11) an eine Leistungsquelle angeschlossen ist, die von einem elektronischen Steuersystem (13) der Anlage gesteuert wird, und dass das Energieprojektionselement (11) auf das aus der Zufuhrdüse (8) austretende Material ausgerichtet ist, um dieses zu schmelzen, bevor es auf der Fertigungsunterlage (6) abgelegt wird.

## Claims

1. A method for manufacturing a component, in particular a turbomachine component, in the form of a plurality of superposed layers of a material on a manufacturing support (6), the method comprising a step of supplying the material into a feed nozzle (8) and a step of projecting energy towards the material so as to cause the material to melt on the manufacturing support, **characterised in that** the method comprises a step of cooling the feed nozzle (8) by means of a cooling element projected by at least one spray nozzle (15) during the energy projection step and **in that** the cooling element is projected over the entire height of the feed nozzle (8).

2. The method according to the preceding claim, **characterised in that** the material is in the form of wire.

3. The method according to any one of the preceding claims, **characterised in that** the material is metallic.

4. The method according to any one of the preceding claims, **characterised in that** the cooling element is projected at a pressure of between 1 and 3 bar.

5. The method according to any one of the preceding claims, **characterised in that** the cooling element has a temperature in the range of 20°C.

6. The method according to any one of the preceding claims, **characterised in that** the cooling element is a neutral gas flow such as nitrogen or argon.

7. The method according to any one of the preceding claims, **characterised in that** the energy projection step is performed with a laser beam.

8. The method according to any one of the preceding claims, **characterised in that** the projection of the cooling element is continuous.

9. The method according to any one of the preceding claims, **characterised in that** it is a wire laser metal deposition (LMD) additive manufacturing.

10. The method according to any one of the preceding claims, **characterised in that** it comprises a step of depositing the material on the manufacturing support (6), the step of cooling the feed nozzle (8) being carried out during the projection and deposition step.

11. The method according to any one of the claims 1 to 10, **characterised in that** the projecting energy step is carried out by an element for projecting energy (11) connected to an energy source which is controlled by an electronic control system (13) of an installation and **in that** the material is melted before its deposition on the manufacturing support (6).

12. An installation (1) for carrying out a method for manufacturing a component, in particular a turbomachine component, in the form of a plurality of superposed layers of a material on a manufacturing support (6), the installation (1) comprising a feed nozzle (8) for the material intended for manufacturing the component and an element for projecting energy (11) towards the material so as to melt the material on the manufacturing support (6), **characterised in that** at least one spray nozzle (15) is intended for projecting a cooling element over the entire height of the feed nozzle (8).

13. The installation (1) according to the preceding claim, **characterised in that** the spray nozzle (15) is arranged at a distance of between 3 and 10 cm from the feed nozzle (8).

14. The installation (1) according one of claims, 12 and 13 **characterised in that** the installation comprises several spray nozzles (15) and the spray nozzles (15) are arranged one above the other in a direction parallel to the height of the feed nozzle (8).

15. The installation (1) according to any one of claims 12 to 14, **characterised in that** the spray nozzle or all the spray nozzles (15) and the feed nozzle (8) are fixed relative to each other.

16. The installation (1) according to any one of claims 12 to 15, **characterised in that** the element for projecting energy (11) is connected to an energy source which is controlled by an electronic control system (13) of the installation and **in that** the element for projecting energy (11) is oriented towards the material which exits the feed nozzle (8) so as to melt it before its deposition on the manufacturing support (6).
